Europäisches Patentamt

**European Patent Office**

**Office européen des brevets**

(19)

(11) Numéro de publication : **0 022 380**

**B1**

(12)                          **FASCICULE DE BREVET EUROPÉEN**

(45) Date de publication du fascicule du brevet :
**11.05.83**

(51) Int. Cl.³ : **H 04 N   3/18, H 02 M   3/335**

(21) Numéro de dépôt : **80400651.8**

(22) Date de dépôt : **12.05.80**

---

(54) **Dispositif d'alimentation par découpage combiné avec un circuit de balayage-ligne d'un récepteur de télévision, régulé par déphasage variable.**

---

(30) Priorité : **29.06.79 FR 7916905**

(43) Date de publication de la demande :
**14.01.81 Bulletin 81/02**

(45) Mention de la délivrance du brevet :
**11.05.83 Bulletin 83/19**

(84) Etats contractants désignés :
**DE GB NL**

(56) Documents cités :
**EP A 0 005 391**
**DE A 2 160 659**
**FR A 2 345 762**

**SIEMENS BAUTEILE REPORT, Vol. 12, No. 4, 1974 München DE PERUTH et SCHRENK : « Praktische Pumptransistorschaltungen für Fernsehempfänger », pages 96-98.**

(73) Titulaire : **THOMSON-BRANDT**
**173, Boulevard Haussmann**
**F-75379 Paris Cedex 08 (FR)**

(72) Inventeur : **Facon, Michel**
**"THOMSON-CSF" SCPI 173, bld Haussmann**
**F-75360 Paris Cedex 08 (FR)**

(74) Mandataire : **Schmolka, Robert et al**
**THOMSON-CSF SCPI 173, Bld Haussmann**
**F-75379 Paris Cedex 08 (FR)**

Jouve, 18, rue St-Denis, 75001 Paris, France

**Dispositif d'alimentation par découpage combiné avec un circuit de balayage-ligne d'un récepteur de télévision, régulé par déphasage variable**

La présente invention concerne un dispositif d'alimentation par découpage d'une tension continue, généralement obtenue par redressement de la tension alternative provenant du réseau, destiné à alimenter en tension continue notamment l'étage de sortie du circuit de balayage-ligne auquel il est combiné. La régulation de la tension d'alimentation fournie par le condensateur réservoir relié à l'interrupteur bidirectionnel du balayage-ligne par l'intermédiaire de l'un des enroulements du transformateur-ligne, est effectuée par la variation du déphasage entre les instants de blocage respectifs des interrupteurs de balayage et de découpage.

Dans un dispositif connu d'alimentation par découpage et de balayage-ligne combinés, décrit dans la publication US-A-3 999 102 et dans la publication FR-A-2 275 092 correspondante (modes de réalisation des figures 6 et 14), le circuit de découpage comporte un premier interrupteur bidirectionnel commandé, branché en série avec une première inductance, dite de découpage, entre les bornes d'une source de tension continue avec un condensateur d'accord connecté en parallèle avec cette inductance (ou cet interrupteur) pour former avec celle-ci un premier circuit résonnant dont la fréquence d'oscillation est sensiblement inférieure à celle d'un second circuit résonnant comprenant notamment les bobines de déviation-ligne et le condensateur de retour connecté en parallèle avec un second interrupteur bidirectionnel commandé de l'étage de sortie du balayage-ligne, qui est déterminée par la durée de l'intervalle de retour-ligne. Ces bobines en série avec un condensateur d'aller ou d'effet « S » qui les alimente pendant l'aller du balayage et une seconde inductance constituée par un premier enroulement du transformateur-ligne en série avec un condensateur réservoir, sont respectivement connectées en parallèle avec le second interrupteur (qui est généralement commandé par un oscillateur de ligne asservi en fréquence et phase aux impulsions de synchronisation-ligne contenues dans le signal vidéo-complexe). Les interrupteurs de balayage et de découpage sont commandés par des impulsions récurrentes ayant la même fréquence de répétition.

Dans les modes de réalisation précités (des figures 6 et 14), l'inductance de découpage est magnétiquement couplée au premier enroulement du transformateur-ligne du fait qu'il en constitue un second enroulement, dit d'alimentation, de sorte que le transfert d'énergie entre les circuits de découpage et de balayage s'effectue par l'intermédiaire de ce transformateur. Lorsque le couplage entre les premier et second enroulements est lâche, les fréquences de résonance des circuits oscillants formés respectivement par l'inductance de découpage et le condensateur d'accord, et par les inductances des bobines de déviation et du premier enroulement du transformateur en parallèle avec le condensateur de retour, peuvent être très différentes et les instants de blocage récurrents des interrupteurs de balayage et de découpage suivis chacun d'une demi-période d'oscillation de ces circuits oscillants peuvent être déphasés l'un par rapport à l'autre. La variation de ce déphasage relatif ou de cet intervalle de retard donne lieu à une variation de la puissance fournie et, par conséquent, de la tension aux bornes du condensateur réservoir. Ce fait est utilisé pour la régulation de cette tension de réservoir alimentant, notamment, l'étage de sortie et dont dépend, d'une part, l'amplitude crête-à-crête de la forme d'onde du courant de balayage-ligne en dent de scie et, d'autre part, la très haute tension alimentant le tube à rayons cathodiques.

Lorsque le retard de phase entre les instants de blocage des interrupteurs de balayage et de découpage est tel que les maxima respectifs des tensions d'oscillation en forme de demi-sinusoïdes des deux circuits oscillants sont décalés sensiblement d'une demi-période de récurrence, c'est-à-dire lorsque les maxima de tension des oscillations provoquées aux bornes de l'un des circuits résonnants par l'ouverture de l'interrupteur associé coïncident avec les passages par zéro du courant dans l'inductance de l'autre circuit résonnant qui est alors réunie en parallèle à sa source de tension d'alimentation (ou réservoir) continue associée, le transfert d'énergie entre les deux circuits est nul.

Pour des sens relatifs prédéterminés des deux enroulements précités du transformateur-ligne, le transfert d'énergie varie dans un sens, lorsque l'écart de phase devient inférieur à celui correspondant à un transfert nul, et dans l'autre sens, lorsqu'il devient supérieur. Ceci implique, d'une part, que l'inversion du sens de l'un de ces enroulements permet d'inverser le sens du transfert d'énergie et, par conséquent, celui de la variation du retard de phase et, d'autre part, que le circuit est reversible de sorte que si l'on réunit les bornes du condensateur réservoir à celles d'une source de tension continue, le circuit de balayage peut fournir de l'énergie de façon régulée au circuit de découpage, si l'on remplace sa source d'alimentation par un condensateur de filtrage connecté à une charge en parallèle.

De ce qui précède, il résulte que pour obtenir une régulation de la tension aux bornes du condensateur réservoir, il faut commander l'ouverture de l'interrupteur de découpage avec un retard par rapport à celle de l'interrupteur de balayage, qui est variable en fonction de cette tension de réservoir ou d'une tension fonction de celle-ci telle que l'une des amplitudes de l'impulsion de retour-ligne. On dispose de nombreux circuits connus permettant de faire varier le retard d'une impulsion ou d'une transition (front avant ou arrière) de sortie par rapport à une impulsion ou transition d'entrée en fonction d'une tension continue, appelés générateurs de retard, tels que notamment des basculeurs monostables du type à amplificateur différentiel à couplage par émetteurs dont une tension de polarisation de la base ou du collecteur varie, ou un générateur de dents de scie déclenché par la forme d'onde d'entrée et alimentant un comparateur de tension, où soit la tension de seuil du comparateur, soit la pente de la dent de scie est modifiée en fonction d'une tension dérivée de la tension de réservoir.

Dans la publication intercalaire EP-A-0 005 391 du demandeur, publiée le 14.11.79, l'inductance de découpage n'est plus constituée par le seul second enroulement du transformateur-ligne, mais comprend une inductance (bobine de choc) en série avec ce second enroulement appelé « d'alimentation », dont la valeur (de plusieurs millihenry) est grande devant l'inductance ramenée de l'étage de sortie de balayage-ligne aux bornes de cet enroulement d'alimentation. Cette inductance ramenée par le transformateur-ligne dans le circuit de découpage est sensiblement égale à l'inductance des bobines de déviation-ligne multipliée par le carré du rapport de transformation entre les premier et second enroulements de ce transformateur (choisi actuellement compris entre 0,49 et 0,7). Cette inductance ramenée est alors sensiblement comprise entre le quart et la moitié de celle des bobines de déviation-ligne. La grande valeur de l'inductance de découpage série par rapport à l'inductance ramenée permet, d'une part, une bonne séparation relative des circuits de découpage et de balayage et, d'autre part, une protection du circuit de découpage, notamment du transistor de commutation haute-tension, lors d'un éventuel court-circuit du transistor (ou thyristor) de balayage. Le transistor de découpage y est commandé par un circuit de régulation alimenté par des impulsions de retour-ligne provenant d'un enroulement auxiliaire du transformateur-ligne, qui déclenche un générateur de retard variable et dont une amplitude crête redressée commande la variation de ce retard.

Dans cette publication intercalaire précitée, il a également été proposé un circuit de régulation perfectionné, alimenté par la tension du réseau redressée et stabilisée, comprenant un multivibrateur astable fonctionnant au démarrage de façon autonome afin de permettre l'alimentation du circuit de balayage-ligne tout entier à partir du condensateur réservoir qui est chargé par un courant dû au courant de découpage induit dans l'enroulement primaire du transformateur-ligne et redressé par la diode en anti-parallèle avec le transistor de balayage. Dès la mise en route de l'oscillateur-ligne alimenté par la tension réservoir, l'étage de sortie-ligne fournit sur l'enroulement auxiliaire du transformateur-ligne des impulsions retour-ligne qui déclenchent le générateur de retard variable et dont l'amplitude redressée fournit une tension de régulation à ce générateur. Ces impulsions peuvent également assurer la synchronisation du multivibrateur préalablement à la régulation par variation du déphasage.

La présente invention permet de simplifier le démarrage autonome du circuit de découpage, sans alimentation autonome du circuit de régulation, ni multivibrateur astable, ni étage d'attaque du transistor de découpage, équipé de deux transistors de puissance en push-pull série, par exemple, que celui-là doit alimenter.

L'invention a pour objet un dispositif d'alimentation par découpage combiné avec un circuit de balayage-ligne d'un récepteur de télévision, qu'il alimente et dont l'étage de sortie comprend, notamment, un interrupteur bidirectionnel commandé de balayage et, monté en parallèle avec celui-ci, un montage série composé d'un condensateur réservoir et d'un premier enroulement d'un transformateur-ligne et un condensateur de retour, le dispositif comprenant un circuit de découpage comportant notamment, connectés en série entre les bornes d'une source de tension d'alimentation continue, un second enroulement du transformateur-ligne, et un interrupteur bidirectionnel commandé de découpage, le transfert d'énergie étant effectué par l'intermédiaire des premier et second enroulements et sa régulation étant effectuée par le déphasage variable entre les instants de coupure respectifs des interrupteurs de balayage et de découpage, travaillant normalement à rapports cycliques et à fréquence constants, en fonction d'une grandeur électrique dérivée de la .tension aux bornes du condensateur réservoir et obtenu au moyen d'un générateur de retard variable alimenté par un troisième enroulement du transformateur-ligne, qui fournit des impulsions de retour-ligne, l'interrupteur de découpage comprenant un transistor et une diode montés en parallèle et de façon à conduire en des directions opposées. Un tel dispositif est connu de la publication FR-A-2 275 092.

Suivant l'invention, le circuit de découpage comporte, en outre, une inductance de découpage supplémentaire, insérée en série entre le second enroulement et l'interrupteur de découpage, un condensateur d'accord étant connecté en parallèle avec ce dernier afin de former avec l'inductance de découpage un circuit résonnant, et il est combiné avec un circuit de commande et de démarrage assurant son démarrage autonome lors de sa mise sous tension, en alimentant alors la base du transistor de découpage et comprenant : un enroulement de réaction bobiné sur le noyau de l'inductance de découpage de manière à former un autre transformateur et ayant une première borne couplée à la jonction de l'émetteur du transistor et de l'anode de la diode et une seconde borne couplée, par des moyens de couplage comprenant notamment une résistance de limitation de courant, à la base du transistor afin de la polariser à l'aide d'une tension en opposition de phase avec sa tension collecteur ; un thyristor dont la cathode est reliée au pôle négatif de la source d'alimentation et réunie, par l'intermédiaire d'une résistance de protection, à la jonction de l'émetteur du transistor et de l'anode de la diode, qui est réunie à son tour à la gâchette du thyristor au moyen d'une résistance de gâchette, et dont l'anode est réunie à ladite base, notamment par l'intermédiaire d'une autre source de tension continue, destinée à polariser la jonction base-émetteur du transistor à l'envers, lors de l'amorçage du thyristor qui est déclenché au démarrage ou en l'absence d'impulsions de retour-ligne, par la chute de tension aux bornes de la résistance de protection, provoquée par le courant linéairement croissant dans l'inductance de découpage pendant la conduction du transistor qui est alors polarisé à l'aide d'une résistance de démarrage réunissant sa base au pôle positif de la source d'alimentation, et, en fonctionnement normal, l'amorçage du thyristor est commandé par des impulsions retardées, fournies par la sortie du générateur qui est couplée à la gâchette au moyen d'un condensateur de couplage.

L'invention sera mieux comprise et d'autres de ses caractéristiques et avantages apparaîtront à l'aide de la description ci-après et des dessins annexés s'y rapportant, donnés à titre d'exemple, sur lesquels :

la figure 1 est un schéma de principe, partiellement synoptique, d'un dispositif d'alimentation à découpage suivant l'invention ;

les figures 2A à 2G montrent des diagrammes des formes d'ondes de tensions et de courants à divers points du circuit de la figure 1 ;

la figure 3 est un schéma de principe du mode de réalisation du circuit de découpage 30, de son circuit de commande et du générateur de retard variable 40 effectuant la régulation, de la figure 1 ; et

la figure 4 est un schéma de principe partiel du mode de réalisation préféré du circuit de découpage 30 d'un dispositif d'alimentation suivant l'invention, notamment en ce qui concerne le circuit de commande du transistor de découpage 320.

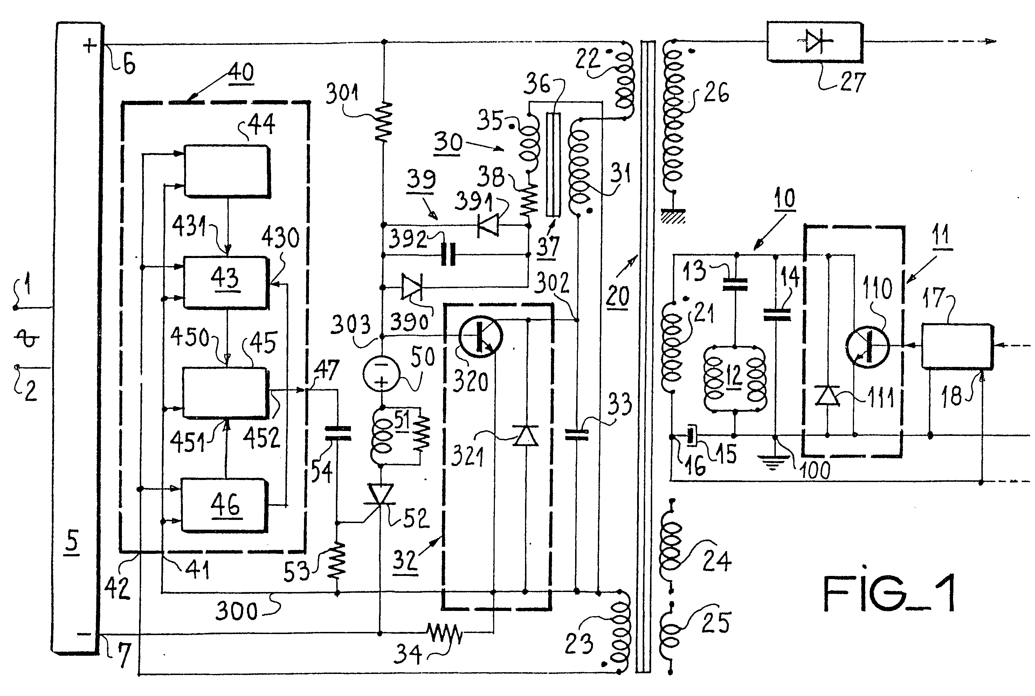

La figure 1 montre schématiquement un dispositif d'alimentation à découpage dont le circuit de découpage perfectionné suivant l'invention, est combiné à l'étage de sortie du balayage-ligne (horizontal) d'un récepteur ou moniteur de télévision comportant un tube à rayons cathodiques à déviation électromagnétique.

Sur la figure 1, l'étage de sortie 10 classique comporte un premier interrupteur bidirectionnel commandé 11, comprenant un transistor de commutation du type NPN 110 avec une diode 111 connectée en antiparallèle, et dont l'une des bornes est connectée à la masse, dite froide ou secondaire 100, du récepteur qui est isolée de la masse, dite chaude ou primaire, galvaniquement couplée au réseau alternatif et donc à la borne négative 7 de la source de tension continue d'alimentation 5 du circuit de découpage 30.

Aux bornes du premier interrupteur 11, qui sera appelé dans ce qui suit interrupteur de balayage, on a branché un premier montage série composé des bobines de déviation-ligne 12 et d'un premier condensateur 13, dit d'aller ou d'effet « S », car c'est lui qui alimente les bobines 12 pendant l'aller du balayage, lorsque l'interrupteur 11 est fermé, et qui permet, par le choix de sa capacité, de compenser les distorsions géométriques aux deux bords de l'écran, dues à sa forme quasiplane. On y a également connecté les bornes d'un second condensateur 14, dit de retour, qui forme avec les bobines de déviation 12 un circuit résonnant parallèle, lors de l'ouverture de l'interrupteur du balayage 11, de sorte que le retour du balayage est effectué au moyen d'une demipériode de forme cosinusoïdale du courant dans les bobines 12 impliquant une demi-sinusoïde positive de tension aux bornes du condensateur de retour 14, appelée impulsion de retour-ligne. La durée de cette demi-période d'oscillation doit être inférieure à celle de l'intervalle de suppression-ligne (12 microsecondes).

Un second montage série composé d'un premier enroulement 21 d'un transformateur 20, dit de ligne, et d'un troisième condensateur 15, dit condensateur réservoir, est également connecté aux bornes de l'interrupteur de balayage 11. Ce condensateur réservoir 15 dont l'armature négative est connectée à la masse froide 100, présente une capacité importante. Pendant les périodes d'aller du balayage, le condensateur réservoir 15 est connecté en parallèle avec l'enroulement 21 du transformateur 20 et, pendant les périodes de retour du balayage, l'inductance de fuite $L_{21}$ de cet enroulement est en parallèle avec l'inductance des bobines 12 pour former avec le condensateur de retour 14 le circuit résonnant parallèle susmentionné. Par conséquent, l'enroulement 21 est également parcouru d'un courant en forme de dents de scie, pendant les périodes d'aller, et d'un courant en forme de demi-cosinusoïde, pendant le retour du balayage.

Dans les publications US-A-3 999 102 et FR-A-2 275 092, ainsi que dans la publication intercalaire EP-A-0 005 391 précitées, le circuit de découpage décrit permet de fournir de l'énergie à l'étage de sortie du balayage 10 sous la forme d'une tension aux bornes du condensateur réservoir 15. Dans le circuit de la publication EP-A-0 005 391 précitée, l'armature positive 16 du condensateur réservoir 15 est reliée à l'entrée d'alimentation 18 du circuit de commande 17 de l'interrupteur de balayage 11, pour permettre le démarrage du récepteur de télévision dont un certain nombre de tensions d'alimentation, telles que des basses et la très haute, peuvent être obtenues par le redressement et le filtrage des impulsions de retour-ligne prélevées respectivement aux bornes des enroulements 24, 25 et 26 du transformateur-ligne 20.

Le circuit de commande 17 comporte donc en cascade l'oscillateur-ligne constitué généralement par un oscillateur à fréquence variable en fonction d'une tension de commande fournie par un comparateur de phase comparant la phase des impulsions de synchronisation-ligne prélevées sur le signal vidéo-complexe avec celle du signal de l'oscillateur qui fonctionne de façon autonome dès qu'il est alimenté, et l'étage d'attaque du transistor 110 fournissant à la base de celui-ci des signaux rectangulaires qui commandent sa saturation et son blocage alternés, au cours de chaque période de ligne.

La charge initiale du condensateur réservoir 15 est fournie par le circuit de découpage 30 qui peut fonctionner de façon autonome au démarrage, par exemple, de la manière décrite dans la publication intercalaire EP-A-0 005 391 précitée. Le circuit de découpage décrit dans celle-ci comporte une source de tension continue 5, généralement constituée par un montage redresseur filtré, alimenté sur ses bornes d'entrée 1, 2 par la tension du réseau alternatif. Entre les bornes de sortie 6, 7 de la source 5, on a connecté en série un second enroulement 22, dit d'alimentation, du transformateur-ligne 20, une inductance de découpage 31, et un second interrupteur bidirectionnel commandé 32, dit de découpage, connecté en parallèle avec un quatrième condensateur 33, dit d'accord, qui forme un circuit résonnant parallèle avec l'inductance de découpage 31 et l'inductance de fuite $L_{22}$ de l'enroulement 22 en série, lors de l'ouverture de l'interrupteur de découpage 32. L'interrupteur de découpage 32 comprend un transistor de commutation haute-tension du type NPN 320 et une diode 321 connectée pour conduire dans un sens opposé à celui du transistor 320 (en anti-parallèle). Le transistor 320 doit pouvoir supporter à l'état bloqué des tensions collecteur-émetteur ($V_{CEX}$) égales ou supérieures à 1 000 volts — comme ceux des types BU 207 (1 300 V), BU 208 (1 500 V) ou BU 209 (1 700 V) de SESCOSEM — car l'amplitude crête de l'impulsion de la tension collecteur pendant la demi-période d'oscillation du circuit résonnant ($L_{31}$ + $L_{22}$, $C_{33}$) peut être plus du triple de la tension continue aux bornes 6, 7 de la source 5 (300 V environ).

Dans la publication intercalaire EP-A-0 005 391 précitée, l'une des bornes de l'interrupteur de découpage 32, constituée par la jonction de l'émetteur du transistor 320 avec l'anode de la diode 321, est directement reliée à la masse primaire ou chaude qui y est reliée à la borne négative 7 de la source 5.

Dans le circuit de découpage 30 suivant l'invention, l'émetteur du transistor 320 est relié à la borne négative 7 par l'intermédiaire d'une résistance 34, dite de mesure ou de protection, dont la valeur est généralement choisie comprise entre 0, 5 et 1,5 ohms et aux bornes de laquelle le courant émetteur de ce transistor provoque une chute de tension qui croît sensiblement linéairement pendant son état saturé, du fait du courant linéairement croissant qui parcourt alors l'inductance de découpage 31 et l'enroulement 22 du transformateur-ligne 20.

La fonction de cette résistance 34, connue, par exemple, de la publication DE-B-21 60 659 ou de la publication FR-A-2 345 762 de la demanderesse, sera expliquée plus loin avec le circuit de commande du transistor de découpage 320 suivant l'invention, qui utilise également, en partie, l'enseignement de ces publications.

La publication DE-B-21 60 659, ainsi que les publications DE-A-23 36 110 et 24 17 628, décrivent différents modes de réalisation d'un dispositif d'alimentation par découpage ou convertisseur continu-continu auto-oscillant, comportant un transistor de commutation dont le circuit collecteur comprend un premier enroulement d'un transformateur d'impulsions, connectés entre les bornes de sortie d'un montage redresseur à pont de diodes, un circuit de commande du transistor comprenant un enroulement secondaire, dit de réaction, de ce transformateur qui est couplé entre la base et l'émetteur de celui-ci et qui maintient le transistor dans ses états saturé ou bloqué, un circuit de blocage du transistor comportant un thyristor dont l'anode est couplée à la base du transistor, dont la cathode est réunie, soit directement (DE-A-23 36 110 et 24 17 628), soit par l'intermédiaire d'une pile (composée d'un condensateur en parallèle avec une diode et l'un des enroulements secondaires du transformateur en série — voir DE-B-21 60 659), à celle des bornes de la résistance de mesure et de protection qui est également reliée au pôle négatif du montage redresseur et dont l'autre borne est reliée à l'émetteur du transistor. Lorsque la pile n'est pas insérée entre la cathode du thyristor et la résistance de mesure, elle peut l'être entre la base du transistor et l'anode du thyristor, afin que l'amorçage de celui-ci provoque un blocage rapide de celui-là.

La gâchette du thyristor de blocage est alimentée, d'une part, par un étage comparateur comprenant un transistor de type PNP dont l'émetteur reçoit une tension de référence fixe d'une diode Zener, dont la base reçoit une tension de comparaison proportionnelle à l'amplitude des impulsions de tension aux bornes des enroulements du transformateur et dont le collecteur fournit un courant proportionnel à la différence entre les tensions de comparaison et de référence, et d'autre part, par une tension proportionnelle au courant émetteur du transistor de commutation, prélevée aux bornes de la résistance de mesure et de protection et croissant linéairement avec le temps pendant l'état saturé de celui-ci. De cette façon, on obtient, d'une part, la régulation de l'amplitude des impulsions de tension aux bornes des enroulements du transformateur par la variation de la durée de l'état saturée du transistor de commutation, du fait que la pente de croissance du courant émetteur et donc de la chute de tension aux bornes de la résistance de mesure qui s'ajoute à celle dûe au courant collecteur du transistor comparateur, est constante (pour une tension d'alimentation constante) et déterminée par l'inductance de fuite de l'enroulement dans le circuit collecteur du transistor de commutation et que, par conséquent, la durée de l'état saturé de celui-ci est une fonction inverse de l'amplitude des impulsions de tension précitées, et d'autre part, une protection contre le dépassement d'une valeur maximale prédéterminée du courant émetteur de ce transistor au démarrage du circuit, du fait qu'en l'absence de tension de comparaison et donc du courant collecteur du transistor comparateur, l'amorçage du thyristor est commandé uniquement par la chute de tension aux bornes de la résistance de mesure. Le démarrage du circuit à sa mise sous tension est obtenu, selon la DE-B 21 60 659, à l'aide d'une résistance de démarrage (de plusieurs dizaines de kiloohms) réunissant la base du transistor de commutation au pôle positif du montage redresseur.

Le blocage du transistor de commutation ayant été provoqué par l'amorçage du thyristor dû à l'effet conjugué d'une tension continue proportionnelle à celle de sortie et de la croissance linéaire de son courant émetteur à pente constante, la durée de son état bloqué est déterminée par la somme des courants débités dans les charges, par l'intermédiaire des diodes de redressement, par tous les enroulements du transformateur. Ces courants étant linéairement décroissants, ils provoquent aux bornes de l'enroulement de réaction une tension négative appliquée à la base du transistor de commutation, qui y est maintenue jusqu'à leur annulation. Cette annulation provoque, aux bornes de l'enroulement de réaction une transition positive vers une tension nulle avec un début de suroscillation qui polarise la jonction base-émetteur du transistor de commutation pour qu'il se mette à conduire de nouveau et pour que l'effet cumulatif de la réaction l'amène rapidement à la saturation.

Dès que le transistor de commutation est saturé, son courant collecteur traversant l'inductance de fuite de l'enroulement de travail du transformateur, devient linéairement croissant de manière à produire aux bornes de l'enroulement de réaction une tension positive de niveau constant qui le maintient saturé jusqu'au prochain amorçage du thyristor. Lorsque le courant consommé par la charge augmente, la durée de l'état saturé du transistor de commutation, qui détermine l'énergie emmagasinée dans l'enroulement de travail du transformateur ($1/2 \ LI^2_{MAX}$), augmente également. Il en résulte une diminution concomitante de la fréquence d'auto-oscillation du circuit.

Dans le dispositif d'alimentation par découpage suivant l'invention, illustré par la figure 1, la base du transistor de découpage 320 est réunie, d'une part, à l'une des bornes d'un enroulement de réaction 35 bobiné sur le noyau 36 (en ferrite) de l'inductance de découpage 31 qui forme de ce fait un second transformateur 37, par l'intermédiaire d'une résistance 38 et d'un montage 39 composé de deux diodes 390, 391 connectées tête-bêche et d'un condensateur 392 en parallèle. L'autre borne de l'enroulement 35 est connectée à la jonction de l'émetteur du transistor 320 et de l'anode de la diode 321, qui forme un point de potentiel de référence 300 pour les circuits de commande et de régulation. Cette base est, d'autre part, reliée au pôle négatif d'une pile 50 (semblable à celle des publications allemandes précitées) dont le pôle positif est relié, par l'intermédiaire d'un montage parallèle d'une inductance et d'une résistance 51, destiné à la protection contre les di/dt excessifs, à l'anode d'un thyristor 52 commandant le blocage rapide du transistor de commutation en appliquant à sa base une tension négative, fournie notamment par la pile 50. La cathode du thyristor 52 est reliée à la jonction de la résistance de mesure et de protection 34 et du pôle négatif 7 de la source 5. La gâchette du thyristor 52 est réunie au moyen d'une résistance 53 au point du potentiel de référence 300, c'est-à-dire à l'émetteur du transistor 320, afin qu'elle reçoive la chute de tension provoquée aux bornes de la résistance de mesure 34 par le courant émetteur de celui-ci. Ceci permet de limiter le courant crête dans l'inductance 31 et donc la durée de l'état saturé du transistor 320 au cours du démarrage qui est rendu possible par une résistance dite de démarrage 301 réunissant, par ailleurs, la base de celui-ci au pôle positif 6 de la source 5. Ce sont alors les valeurs respectives de l'inductance 31, de la résistance 34 et de la tension d'alimentation $V_A$ entre les bornes 6 et 7 qui déterminent la fréquence d'oscillation autonome du circuit de découpage 30 avant la mise en route du circuit de balayage-ligne 10 par l'établissement de la tension $V_{15}$ aux bornes du condensateur réservoir 15, qui doit être choisie inférieure à la fréquence de ligne ($F_H$ = 15.625 Hz).

Contrairement aux circuits des publications allemandes précitées, la durée de l'état bloqué $T_B$ du transistor de commutation 320 ne varie pas avec la charge, mais elle est sensiblement constante et déterminée par la fréquence de résonance du circuit oscillant formé par le condensateur d'accord 33 et l'inductance 31 en série avec l'inductance de fuite de l'enroulement 22. L'interrupteur de découpage 32 étant bidirectionnel, l'inductance 31 commence à conduire un courant croissant légèrement avant le passage par zéro de l'impulsion de tension, c'est-à-dire après que le courant ait atteint sa valeur de crête négative. Le courant croissant s'écoule ensuite à travers la diode 321.

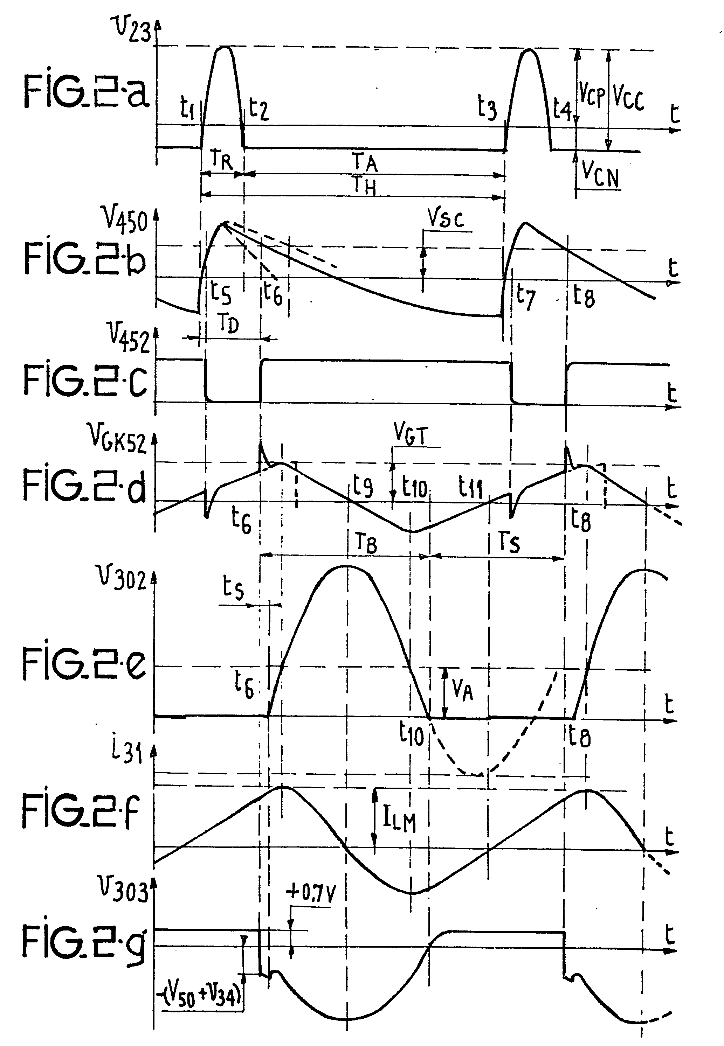

Par ailleurs, en fonctionnement normal, le thyristor 52 n'est plus amorcé par l'effet de la tension proportionnelle au courant émetteur du transistor 320, mais par des impulsions de déclenchement provenant d'un générateur de retard variable 40 en fonction d'une tension dérivée de la tension aux bornes du condensateur réservoir 15. Ce générateur de retard variable 40 comporte des entrées d'alimentation dont l'une 41 est reliée au point du potentiel de référence 300 et dont l'autre 42 est reliée à l'une des bornes d'un enroulement secondaire, dit auxiliaire 23, du transformateur-ligne 20, dont l'autre borne est également reliée au point 300. Cet enroulement 23 fournit des impulsions de retour-ligne $v_{23}$ avec une phase prédéterminée et sans valeur moyenne (voir figure 2A) par rapport au point 300. Tous les éléments constitutifs du générateur 40 reçoivent la tension de référence $V_{300}$ et certains les impulsions de retour-ligne. Le générateur 40 comporte un générateur de tension en forme de dents de scie 43 qui est déclenché par le front de montée de chaque impulsion de retour-ligne. Le générateur de dents de scie 43 comporte une première entrée 430 reliée à la sortie d'une seconde source de tension autonome 46 comprenant un ou plusieurs montages redresseurs des impulsions de retour-ligne et une seconde entrée 431 reliée à la sortie d'un circuit de commande de la pente de la dent de scie 44 qui permet de faire varier celle-ci à l'aide d'un générateur de courant qui est fonction de l'une des amplitudes des impulsions de retour-ligne. La sortie du générateur de dents de scie 43 à pente variable est reliée à l'entrée de comparaison 450 d'un étage comparateur 45 qui est alimenté sur son entrée d'alimentation 451 par une tension provenant de la seconde source 46 et qui fournit sur sa sortie 452 une impulsion positive, d'amplitude suffisante pour amorcer le thyristor 52 par sa gâchette, dès que la dent de scie atteint une tension de seuil fixe. La sortie 452 qui constitue la sortie 47 du générateur de retard variable 40, est couplée, par l'intermédiaire d'un condensateur de couplage 54, à la gâchette du thyristor 52.

On remarquera ici qu'il est parfaitement équivalent d'engendrer des dents de scie à pente fixe et faire varier la tension de seuil du comparateur en fonction de l'une des amplitudes des impulsions de retour-ligne.

Il en résulte un retard variable entre les instants de coupure respectifs des interrupteurs de balayage 11 et de découpage 32 en fonction d'un paramètre dérivé de la tension aux bornes du condensateur réservoir 15, qui permet d'effectuer une régulation de celle-ci de la manière décrite les publications US-A-3 999 102 et EP-A-0 005 391 susmentionnées avec une simplification notable du circuit de commande du transistor de découpage 320.

Les figures 2A à 2G sont des diagrammes de formes d'onde de tensions et d'un courant en divers points du circuit de la figure 1 permettant d'expliquer le fonctionnement du circuit de découpage 30 et du générateur de retard variable 40.

Sur la figure 2A on a représenté la forme d'onde de la tension $v_{23}$ (t) aux bornes de l'enroulement 23 du transformateur-ligne 20, due au fonctionnement de l'étage de sortie 10 du balayage-ligne, lorsqu'il est alimenté par la valeur nominale de la tension $V_{15}$ aux bornes du condensateur réservoir 15. La tension $v_{23}$ (t) se compose d'une succession alternée d'impulsions demi-sinusoïdales d'amplitude positive $V_{CP}$, pendant des intervalles de retour-ligne ($T_R = t_2 - t_1$), et de plateaux négatifs d'amplitude $V_{CN}$ proportionnelle à la tension de réservoir $V_{15}$, pendant les intervalles d'aller du balayage ($T_A = t_3 - t_2$).

Les transitions positives des impulsions de retour-ligne sont utilisées dans le générateur de dents de scie 43 pour charger positivement un condensateur à travers une diode, ce condensateur étant, par ailleurs, déchargé exponentiellement à travers une résistance alimentée par une tension négative obtenue par le redressement des plateaux d'amplitude $V_{CN}$. L'étage de régulation 44 comporte un générateur de courant constant alimenté, par exemple, par les impulsions de retour-ligne redressées de façon à fournir au condensateur un courant de charge additionnel, qui est proportionnel à l'amplitude $V_{CP}$ des impulsions. De cette façon on fait varier la tension crête positive aux bornes du condensateur en fonction de l'amplitude $V_{CP}$. Il serait également possible de faire varier la pente de décroissance de cette tension en fonction conjuguée de l'amplitude $V_{CP}$ du fait du courant de charge additionnel et de l'amplitude négative $V_{CN}$ du fait de la tension redressée alimentant la résistance de décharge, si celle-ci n'est pas stabilisée à l'aide d'une diode Zener.

La tension résultante $v_{450}$, représentée sur la figure 2B, est appliquée à l'entrée de comparaison 450 du comparateur de tension 45 dont l'autre entrée 451 de référence reçoit une tension de seuil de comparaison $V_{SC}$ constante (obtenue par exemple, à l'aide d'une diode Zener) ou réglable (à l'aide d'un montage potentiométrique).

La sortie 452 du comparateur 45 fournit un signal rectangulaire $v_{452}$ (t) illustré par la figure 2C dont les transitions positives se produisent aux instants $t_6$ et $t_8$, quand la tension décroissante $v_{450}$ atteint la tension de seuil de comparaison $V_{SC}$. On peut voir aisément qu'une variation de la pente de décroissance de la tension $v_{450}$ permet de faire varier l'intervalle $T_D$ de retard entre les instants $t_1$ et $t_6$, ce dernier correspond à celui de l'amorçage du thyristor 52, comme il sera expliqué ci-après.

La figure 2D représente la tension gâchette-cathode $v_{GK52}$ du thyristor 52 qui, contrairement aux autres formes d'onde de tension qui sont mesurées par rapport au potentiel de référence $V_{300}$, est mesurée par rapport à la borne négative 7 de la source 5 à laquelle est reliée la cathode de celui-ci. De cette manière, la tension $v_{GK52}$ est constituée par la chute de tension $v_{34}$ aux bornes de la résistance de mesure 34 à laquelle sont superposées des impulsions, dites de régulation, résultant de la différentiation du signal rectangulaire $v_{452}$ par le circuit différentiateur comprenant le condensateur de couplage 54 et la résistance 53 réunissant la gâchette au point du potentiel de référence 300. Lorsque, à l'instant $t_6$ (ou $t_8$), le front avant d'une impulsion de régulation positive, superposée à la chute de tension $v_{34}$ aux bornes de la résistance 34 de mesure, atteint la tension gâchette-cathode d'amorçage $V_{GT}$ du thyristor 52, celui-ci se met à conduire de façon à appliquer, grâce à la pile 50, une tension négative entre la base 303 et l'émetteur du transistor 320 (voir figure 2G) de façon à le bloquer après l'écoulement d'un temps de stockage $t_S$ nécessaire à l'évacuation des porteurs minoritaires de la base du transistor 320.

A partir de l'instant de blocage $t_6 + t_S$ (ou $t_8 + t_S$) du transistor 320, le courant $i_{31}$ (t) dans l'inductance 31, représenté sur la figure 2F, qui atteint peu après (lorsque $v_{302} = V_A$) sa valeur crête positive $I_{LM}$, devra s'écouler à travers le condensateur d'accord 33, la résistance de mesure 34 et la forte capacité de filtrage du condensateur (non représenté) connecté entre les bornes 6, 7 de la source 5 d'alimentation, en série et ceci de manière oscillatoire. Ceci est représenté sur la figure 2F par une variation cosinusoidale du courant $i_{31}$ (t) entre sa valeur maximale positive $I_{LM}$, postérieurement à l'instant $t_6 + t_S$, et sa valeur maximale négative, antérieurement à l'instant $t_{10}$.

A cela correspond une forme d'onde tension $v_{302}$ (t) à la jonction 302 entre l'inductance 31, le condensateur d'accord 33, le collecteur du transistor 320 et la cathode de la diode 321, représentée sur la figure 2E, qui est quasi-sinusoïdale entre les instants $t_6 + t_S$ et $t_{10}$, par rapport à une valeur moyenne constituée par la tension d'alimentation $V_A$ entre les bornes 6 et 7.

La chute de tension aux bornes de la résistance de mesure 34, représentée sur la figure 2D, comme la tension gâchette-cathode du thyristor 52, présentera donc au cours de l'intervalle de temps $t_6 + t_S$ et $t_{10}$ une forme d'onde sensiblement demi-cosinusoïdale avec une inversion de polarité à l'instant $t_9$, quand le courant oscillatoire s'annule, pour atteindre un minimum avant l'instant $t_{10}$. A partir de l'instant $t_{10}$, où la diode 321 commence à conduire, la chute de tension $v_{34}$, négative par rapport à la borne 7, décroît linéairement jusqu'à un passage par zéro à l'instant $t_{11}$, où le transistor 320, préalablement polarisé par l'enroulement de réaction 35 afin qu'il puisse être saturé, reprend le courant $i_{31}$ (t) linéairement croissant qui parcourt l'inductance 31.

La tension $v_{303}$ (t) à la jonction 303 de la base du transistor 320, du pôle négatif de la pile 50, de la résistance de démarrage 301 et du montage diodes-condensateur 39, par rapport au potentiel de référence $V_{300}$, est représentée sur la figure 2G. Cette tension $v_{303}$ (t), qui constitue la tension base-émetteur du transistor 320, est composé de plateaux positifs d'amplitude de 0,7 volts environ, qui correspondent aux périodes de fermeture de l'interrupteur 32 jusqu'aux instants ($t_6$ ou $t_8$) d'amorçage du thyristor 52, d'une impulsion négative dont l'amplitude correspond à la somme de la tension $V_{50}$ de la pile 50 et de la chute de tension $v_{34}$ aux bornes de la résistance 34, qui est dûe au courant $i_{31}$ dans l'inductance 31, pendant l'intervalle compris entre $t_6$ et $t_6 + t_S$, car le thyristor 52 se bloque dès que les porteurs de charge minoritaires ont été évacués de la base. L'impulsion négative d'amplitude ($V_{50} + R_{34} \cdot i_{31}$) est trapézoïdale, car le courant $i_{31}$ (t) croît linéairement jusqu'à l'instant $t_6 + t_S$. Dès que le transistor 320 se bloque, la tension base-émetteur $v_{303}$ (t) est due uniquement à celle $v_{35}$ (t) induite dans l'enroulement de réaction 35 par le courant oscillatoire, qui est en forme de demi-sinusoïde négative jusqu'à ce qu'elle ait atteint la valeur de × 0,7 volts qui représente la tension aux bornes du condensateur 392 du montage parallèle 39, qui est due au courant dans la première diode 390, notamment à travers la résistance de démarrage 301. Ce palier négatif de faible durée permet de retarder l'application d'une tension positive à la base du transistor 320, avant que sa tension collecteur $v_{303}$ (t) ne soit devenue légèrement négative à l'instant $t_{10}$, où la diode 321 devient conductrice. Dès que la diode 321 conduit, le courant $i_{31}$ (t) dans l'inductance 31 devient linéairement croissant et la tension $v_{35}$ aux bornes de l'enroulement de réaction devient positive de manière à bloquer la première diode 390 du montage parallèle 39 et à charger le condensateur 392 de celui-ci à travers la résistance 38, jusqu'à ce que la seconde diode 391 conduise, lorsque le condensateur 392 a été chargé à + 0,7 volts (ceci représente un écart de tension de 1,4 volts).

Au démarrage du dispositif d'alimentation de la figure 1, le condensateur réservoir 15 alimentant l'étage de sortie 10 ainsi que son circuit de commande 17 comprenant l'oscillateur-ligne, n'est pas chargé. Il n'y a donc aucune impulsion de retour-ligne $v_{23}$ (figure 2A) et le générateur de retard variable 40 n'est pas alimenté et ne fournit, par conséquent, aucune impulsion à la gâchette du thyristor 52. Celui-ci n'est alors amorcé que par la chute de tension $v_{34}$ aux bornes de la résistance de mesure 34 dûe au courant $i_{31}$ dans l'inductance 31 qui s'établit dès la mise sous tension du circuit de découpage 30 par la source 5, du fait que la base du transistor 320 est polarisée positivement par la résistance de démarrage 301. Le courant $i_{31}$ croît alors linéairement jusqu'à ce que la chute de tension $v_{34} = R_{34} \cdot i_{31}$ également croissante atteigne la tension $V_{GT}$ gâchette-cathode d'amorçage du thyristor 52 qui provoque, de la manière décrite ci-dessus, le blocage du transistor 320. Le blocage du transistor 320, se produit alors avec un courant collecteur plus fort, car en l'absence d'impulsions de régulation sur la gâchette, la durée de son état saturé $T_S$ est plus longue, d'où résulte une fréquence d'auto-oscillation $F_D$ du circuit de découpage 30 inférieure à la fréquence-ligne $F_H$. Ceci est illustré sur la figure 2D en pointillé, montrant que l'intersection de la forme d'onde linéairement croissante avec la tension d'amorçage $V_{GT}$ est postérieure à l'impulsion de régulation. La durée $T_B$ de l'état bloqué (ouvert) du transistor 320 (et de la diode 321) qui est déterminée par la fréquence de résonance, notamment de l'inductance 31 avec le condensateur d'accord 33, est constante et les mécanismes de l'ouverture et de la fermeture alternées de l'interrupteur de découpage 32 sont les mêmes que ceux décrits ci-dessus.

Le courant $i_{31}$ (t) de la figure 2F, qui comporte des portions linéaires et cosinusoïdales alternées, parcourt également l'enroulement d'alimentation 22 du transformateur ligne 20 et provoque, par conséquent, aux bornes de l'enroulement 21 connecté à l'étage de sortie 10 une forme d'onde de tension analogue à celle $v_{302}$ (t) représentée sur la figure 2E, mais sans valeur moyenne. Les alternances au cours desquelles la cathode de la diode 111 de l'interrupteur de balayage 11 est polarisée négativement, sont redressées par celle-ci de façon à charger le condensateur réservoir 15 qui, après quelques périodes d'oscillation autonome du circuit découpage 30, est suffisamment chargé pour faire démarrer l'oscillateur-ligne du circuit 17. Ce dernier commande alors les ouvertures et fermetures alternées de l'interrupteur de balayage 11, qui provoquent des impulsions de retour-ligne aux bornes des enroulements 21 et 23 du transformateur 20, nécessaires à l'alimentation et au déclenchement du générateur de retard variable 40 commandant par l'amorçage du thyristor 52 la synchronisation de la fréquence de découpage $F_D$ avec la fréquence de balayage $F_H$.

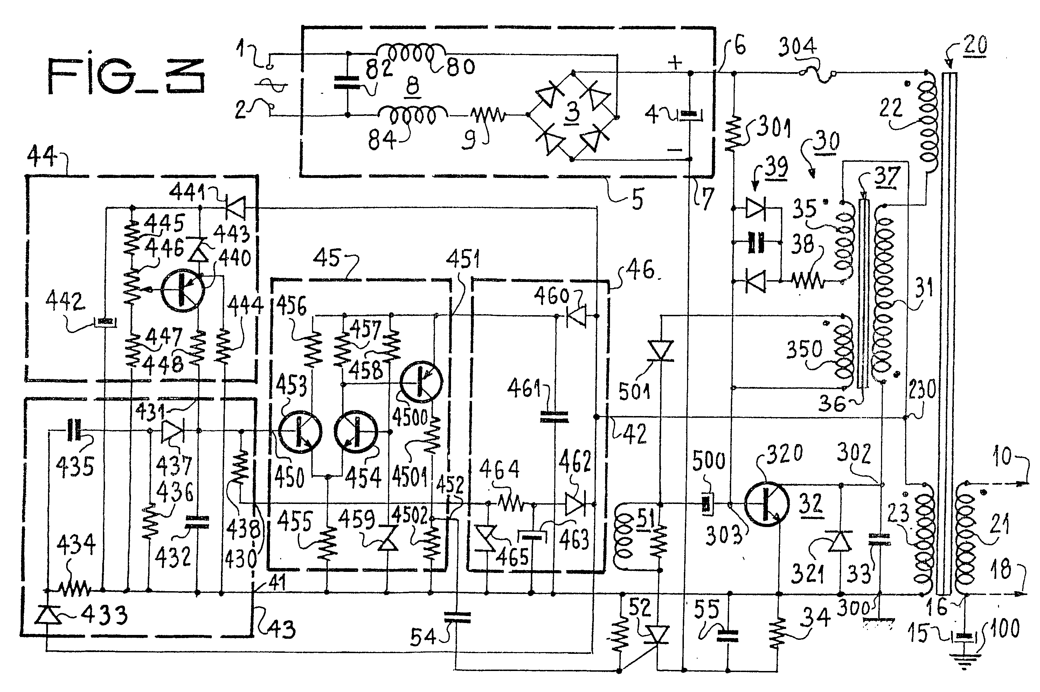

La figure 3 est le schéma de principe d'un premier mode de réalisation d'un circuit de découpage 30 suivant l'invention, dont le générateur de retard variable 40 a été représenté de manière plus détaillée. Les éléments déjà représentés sur la figure 1, ont été respectivement désignés par les mêmes nombres de repère et ne seront plus décrits ci-dessous.

Sur la figure 3, la pile 50 de la figure 1 a été réalisée à l'aide d'un condensateur 500 de type électrochimique, par exemple, dont l'armature négative est reliée, d'une part, à la base du transistor de découpage 320 et, d'autre part, à l'une des bornes d'un second enroulement 350 bobiné autour du même noyau 36 que l'inductance découpage 31 et l'enroulement de réaction 35 et semblable à ce dernier. L'autre borne du second enroulement 350 est reliée à l'anode d'une diode de redressement 501 dont la cathode est reliée à l'armature positive du condensateur 500. Des agencements semblables de la pile 50 ont été décrits dans les publications DE-B-21 06 659 et DE-A-24 17 628.

En outre, l'enroulement de réaction 35 n'a plus l'une de ses bornes directement reliée au point 300 du potentiel de référence $V_{300}$, mais cette borne est reliée ici à l'une des bornes 230 de l'enroulement auxiliaire 23 du transformateur-ligne 20, dónt l'autre borne est au point 300 (émetteur du transistor 320) et qui fournit des impulsions de retour-ligne de polarité positive. Ceci dans le but de compenser, au niveau de l'inductance 31 et de l'enroulement de réaction 35, le courant et la tension provenant de l'étage de sortie 10, induits par l'enroulement 21 dans l'enroulement 22 du transformateur-ligne 20.

La source de tension d'alimentation 5, agencée de manière connue, comprend un pont redresseur de quatre diodes 3 dont la diagonale d'entrée est alimentée à travers un filtre 8 comprenant une self de choc 80, 84 insérée en série dans chaque branche qui la réunit aux bornes d'alimentation 1, 2 branchées sur le réseau alternatif, et un condensateur 82 réunissant ces bornes ensemble. Une résistance de protection 9 est également insérée en série avec l'une des selfs 84. Ce filtre 8 est destiné à empêcher la pollution du réseau par des signaux à la fréquence-ligne provenant des circuits 30 et 10. Un condensateur de lissage 4 électrochimique est connecté entre les bornes de la diagonale de sortie du pont 3, les armatures positive et négative de ce condensateur 4 constituant respectivement les bornes de sortie 6 et 7 de la source 5. Un fusible 304 de protection peut être inséré, par exemple, dans le trajet du courant collecteur du transistor 320, en amont de l'enroulement 22 du transformateur-ligne 20.

Le circuit de régulation 40, constitué ici par le générateur de retard variable et son alimentation, a ses entrées d'alimentation 41, 42 respectivement reliées aux bornes 300 et 230 de l'enroulement 23 d'où il reçoit le signal $v_{23}$ (t) représenté sur la figure 2A, comprenant les impulsions de retour-ligne de polarité positive.

Le générateur de dents de scie 43 comporte une première diode 433 dont l'anode est reliée à l'entrée 42 et dont la cathode est reliée à travers une première résistance 434 à l'entrée 41 qui est au potentiel de référence $V_{300}$. La première diode 433 (d'ébasage) laisse passer les alternances positives du signal $v_{23}$ (t), qui se présentent aux bornes de la première résistance 434 sous la forme d'impulsions positives à la fréquence de ligne, d'amplitude $V_{CP}$ réduite de 0,7 volts environ et de durée légèrement inférieure à celle $T_R$ de l'intervalle de retour-ligne. Ces impulsions sont appliquées à un circuit différentiateur « RC » comprenant un premier condensateur 435 et une seconde résistance 436 en série, la borne libre du premier condensateur 435 étant reliée à la jonction de la première résistance 434 et de la cathode de la première diode 433 et celle de la seconde résistance 436 à l'entrée 41 ($V_{300}$). Aux bornes de celle-ci sont engendrées des impulsions brèves, alternativement positives et négatives, coïncidant sensiblement avec les fronts de montée et de descente des impulsions demi-sinusoïdales et dont l'amplitude est fonction de la pente (dv/dt) de ces fronts et, par conséquent, également de l'amplitude crête-à-crête $V_{cc}$ du signal $v_{23}$ (t) de la figure 2A.

La jonction du premier condensateur 435 et de la seconde résistance 436 est reliée à l'anode d'une seconde diode 437 dont la cathode est relié à l'une des bornes d'un second condensateur 432, l'autre borne de celui-ci étant reliée à l'entrée 41. La seconde diode 437 laisse passer les impulsions positives qui chargent brièvement le second condensateur 432 à une tension positive égale à l'amplitude des impulsions différentiées, réduite de 0,7 volts environ. Le second condensateur 432 est donc chargé positivement au cours de chaque intervalle de retour-ligne à une tension sensiblement proportionnelle à l'amplitude crête positive $V_{CP}$ et, par conséquent, également à l'amplitude crête-à-crête $V_{cc}$ du signal $v_{23}$ (t).

La jonction du second condensateur 432 et de la cathode de la seconde diode 437 est reliée à l'une des bornes d'une troisième résistance 438 dont l'autre borne est reliée à l'entrée d'alimentation 430 du générateur de dents de scie 43, qui reçoit du circuit d'alimentation 46 une tension négative constante, par exemple, de façon à charger le second condensateur 432 à une tension négative à travers la troisième résistance 438 de façon exponentielle. La forme d'onde de la tension aux bornes du second condensateur 432 est alors, en négligeant la régulation par l'étage 44 qui fait varier le retard et qui sera expliquée plus loin, composée d'une brève transition positive au début de chaque intervalle de retour ligne suivie d'une charge exponentielle avec une constante de temps égale à $R_{438} \cdot C_{432}$ vers une tension négative constante, pendant le reste de la période de ligne $T_H$.

Cette dent de scie négative, semblable à celle illustré sur la figure 2B à l'exception de la charge plus rapide du fait de la différentiation, peut être appliquée à l'entrée de comparaison 450 d'un comparateur de tension 45 sous la forme d'un amplificateur différentiel à deux transistors 453, 454 couplés par leurs émetteurs ou d'un circuit intégré linéaire classiques, dont l'entrée de référence reçoit une tension définissant le seuil de comparaison $V_{SC}$. Pour obtenir une régulation avec un gain de boucle élevée, il faut faire varier soit ce seuil $V_{SC}$, soit la pente de la dent de scie $v_{450}$, en fonction de l'une des amplitudes $V_{CP}$, $V_{CN}$ ou $V_{CC}$ du signal $v_{23}$ (t) de la figure 2A.

Dans le mode de réalisation représenté sur la figure 3, c'est la pente de la dent de scie que l'on varie en fonction de l'amplitude crête positive $V_{CP}$ du signal $v_{23}$ (t) au moyen d'un étage de régulation 44 comprenant un redresseur d'amplitude composé d'une diode 441 dont l'anode est reliée à l'entrée 42 et d'un condensateur 442 dont l'armature positive est reliée à la cathode de la diode 441 et dont l'armature négative est reliée à l'entrée 41 ($V_{300}$). Un diviseur de tension résistif réglable, composé de deux résistances 445, 447 et d'un potentiomètre 446 inséré entre elles, montées en série et un montage stabilisateur de tension composé d'une diode Zener 443 et d'une résistance 444 en série, sont connectés aux bornes de ce condensateur 442. L'anode de la diode Zener 443 est reliée à la résistance 444 tandis que sa cathode est reliée à la jonction de l'armature positive du condensateur 442, de la cathode de la diode 441 et de la résistance 445 du diviseur résistif.

L'étage de régulation 44 comporte, en outre, un transistor de type PNP 440, dit de régulation, dont l'émetteur est relié à la jonction de l'anode de la diode Zener 443 avec la résistance 444 et dont la base est reliée au curseur du potentiomètre 446 d'où elle reçoit une fraction réglable de la tension aux bornes du condensateur 442, qui est sensiblement égale à l'amplitude $V_{CP}$ du signal $v_{23}$ (t). Le collecteur du transistor 440 qui constitue un générateur d'un courant qui varie sensiblement proportionnellement à cette amplitude $V_{CP}$, est réuni, par l'intermédiaire d'une résistance 448 à l'entrée de régulation 431 du générateur de dents de scie 43. Cette entrée 431 étant constituée par la jonction du second condensateur 432, de la cathode de la seconde diode 437 et de la troisième résistance 438 de celui-ci, le courant collecteur du transistor de régulation 440 constitue un courant de charge constant positif du second condensateur 432 qui est soustrait de celui négatif parcourant la troisième résistance 438 de façon à réduire la pente descendante de la dent de scie de tension $v_{432}$ semblable à la forme d'onde de la figure 2B.

Le circuit d'alimentation 46 comporte un premier redresseur de crête comprenant une première diode 460 dont l'anode est reliée à l'entrée 42 et dont la cathode est reliée à l'une des bornes d'un premier condensateur 461 et à l'entrée d'alimentation 451 du comparateur de tension 45 pour lui fournir une tension d'alimentation positive. L'autre borne du premier condensateur 461 est reliée à l'entrée 41 ($V_{300}$).

Il comporte également un second redresseur comprenant une seconde diode 462 dont la cathode est reliée à l'entrée 42 et un second condensateur 463 dont l'armature négative est reliée à l'anode de la seconde diode 462 et dont l'armature positive est reliée à l'entrée 41. La tension négative à la jonction de l'anode de la seconde diode 462 et du second condensateur 463 est stabilisée au moyen d'un montage série composé d'une résistance 464 et d'une diode Zener 465, monté en parallèle avec le second condensateur 463. La jonction de l'anode de la diode Zener 465 avec la résistance 464 fournit à l'entrée d'alimentation 430, reliée à la troisième résistance 438 du générateur de dent de scie 43, une tension négative stabilisée, égale à la tension de Zener de la diode 465.

Le comparateur de tension 45 comporte ici un amplificateur différentiel à deux transistors du type NPN 453, 454, couplés par leurs émetteurs qui sont reliés ensemble par l'intermédiaire d'une résistance émetteur 455 commune au point 300 du potentiel de référence. La base du premier transistor 453 constitue l'entrée de comparaison 450 du comparateur 45, tandis que celle du second transistor 454 constitue son entrée de référence. Les collecteurs des transistors 453 et 454 sont respectivement reliés, par l'intermédiaire de deux résistances collecteur 456 et 457, à l'entrée d'alimentation 451 précitée. L'entrée de référence, c'est-à-dire la base du second transistor 454, est reliée, d'une part, à l'une des bornes d'une quatrième résistance 458 dont l'autre borne est reliée à l'entrée d'alimentation 451 et, d'autre part, à la cathode d'une diode Zener 459 dont l'anode est reliée au point 300 du potentiel de référence et qui fournit une tension de seuil $V_{SC}$ stabilisée. Il serait possible de réunir le collecteur du premier transistor 453 directement à l'une des bornes du condensateur de couplage 54, mais il est préférable de séparer l'amplificateur différentiel du circuit de gâchette du thyristor 52 à l'aide d'un étage séparateur. Cet étage séparateur comprend ici un troisième transistor du type PNP 4 500 dont la base est reliée au collecteur du second transistor 454 et dont l'émetteur est relié à l'entrée d'alimentation 451. Le collecteur du troisième transistor 4 500 est relié, par l'intermédiaire de deux résistances 4 501 et 4 502 en série, au

point 300 du potentiel de référence. La jonction de ces résistances 4 501, 4 502 constitue alors la sortie 452 du comparateur 45, qui est couplée à la gâchette du thyristor 52 par le condensateur 54.

Le fonctionnement de ce comparateur 45, connu en soi, sera expliqué dans ce qui suit avec référence aux figures 2B et 2C. Lorsque la tension aux bornes du condensateur 432 du générateur de dents de scie 43 dépasse, à l'instant $t_5$, la tension de seuil de comparaison $V_{SC} = V_{Z459}$, le premier transistor 453 devient saturé et le second transistor 454 se bloque car la tension émetteur, commune aux deux transistors 453 et 454, dépasse à alors la tension Zener $V_{Z459}$. Le blocage du second transistor 454 entraîne celui du troisième transistor 4 500 de sorte que la tension de sortie $v_{452}$ (figure 2C) devient égale au potentiel de référence $V_{300}$. Lorsque la charge négative du condensateur 432 à travers la résistance 438 ramène, à l'instant $t_6$, la tension $v_{450}$ à la valeur de la tension de seuil $V_{SC}$, le premier transistor 453 se bloque et le second 454 devient saturé, de sorte que la chute de tension aux bornes de sa résistance collecteur 457 amène le troisième transistor (séparateur) 4 500 à la saturation provoquant une transition positive de la chute de tension aux bornes de ses résistances collecteur 4 501, 4 502 formant diviseur de tension. Cette transition positive dont l'amplitude est une fraction prédéterminée de la tension d'alimentation $V_{451}$ du comparateur 45, est transmise par l'intermédiaire du circuit différentiateur formé par le condensateur 54 et la résistance 53, à la gâchette du thyristor 52 pour l'amorcer et provoquer ainsi le blocage du transistor de découpage 320.

Il est également possible de remplacer le générateur de dents de scie 43 et le circuit comparateur 45 par ceux décrits dans la publication EP-A-0 005 391 précitée de la demanderesse qui n'y comportent qu'un transistor chacun.

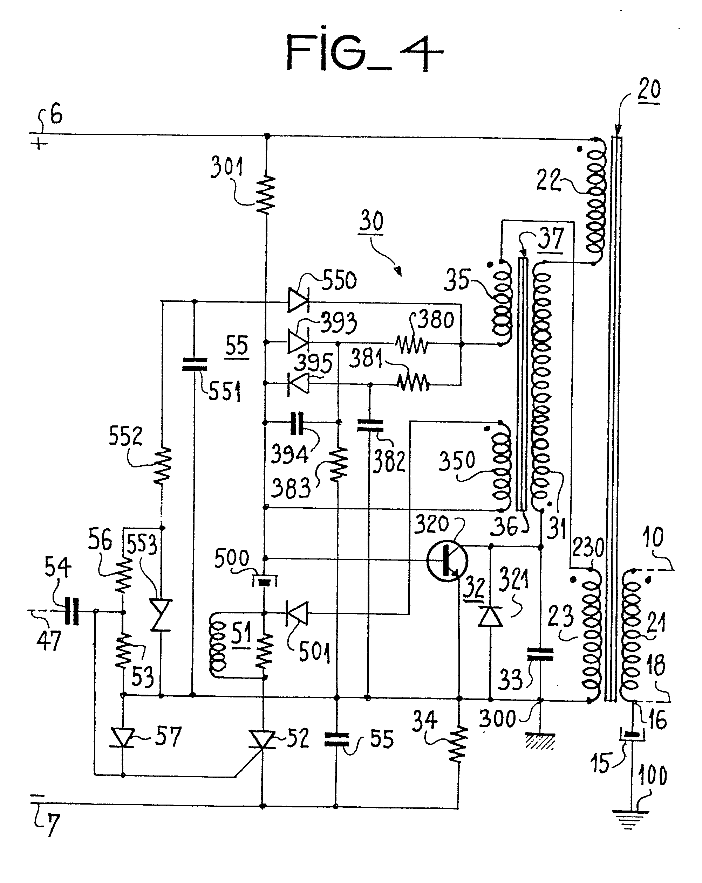

La figure 4 représente un schéma partiel du circuit de découpage 30 dans lequel le montage parallèle 39 composé de deux diodes tête-bêche et d'un condensateur des figures 1 et 3, est remplacé par deux circuits de couplage parallèles, réunissant l'enroulement de réaction 35 à la base du transistor de découpage 32. Certains autres éléments du circuit 30 qui sont identiques, ont été désignés par les mêmes repères que précédemment et ne seront pas décrits de nouveau.

Dans le circuit de la figure 4, l'une des bornes de l'enroulement de réaction 35, couplé à l'inductance de découpage 31, peut être réunie soit directement (voir figure 1), soit à travers l'enroulement auxiliaire 23 du transformateur-ligne 20, au point 300 du potentiel de référence (masse chaude ou primaire). L'autre borne de l'enroulement de réaction 35 est reliée à l'une des bornes de deux résistances 380 et 381, dont la première 380 est reliée par son autre borne à la cathode d'une première diode 393, à l'une des bornes d'une troisième résistance 383 et, éventuellement, à l'une des bornes d'un premier condensateur 394 de faible capacité (quelques nanofarads). L'autre borne de la troisième résistance 383 qui forme avec la première 380 un diviseur de tension résistif, est reliée au point 300 du potentiel de référence. L'anode de la première diode 393 qui remplace la diode 390 du montage 39 et, éventuellement, l'autre borne du premier condensateur 394, sont reliées à la jonction 303 de la base du transistor de découpage 320 et de la résistance de démarrage 301. Cette première diode 393 se met à conduire après l'amorçage du thyristor 52 par le générateur de retard variable 40 (non représenté) ou par la chute de tension aux bornes de la résistance de mesure et de protection 34 (au démarrage ou en cas d'arrêt intempestif de l'étage de sortie 10) pour transmettre à la base 303 du transistor 320, l'alternance négative (inférieure à $\times$ 0,7 volts par rapport à $V_{300}$) de la forme d'onde de tension $v_{35}$ induite dans l'enroulement de réaction 35 par le courant $i_{31}$ (voir figure 2F) parcourant l'inductance de découpage 31 pendant l'intervalle de blocage $T_B$ de l'interrupteur 32. Le diviseur de tension 380, 383 permet de réduire l'amplitude de la tension négative appliquée à la base 303 afin de protéger la jonction base-émetteur du transistor 320 contre des claquages sous l'effet d'une polarisation inverse excessive. Le condensateur 394 permet la transmission atténuée (par le diviseur) des transitions rapides du signal $v_{35}$ afin d'accélérer le blocage du transistor 320. Ce blocage est maintenu pendant la majeure partie de la demi-période d'oscillation de l'inductance 31 avec le condensateur d'accord 33 grâce à la conduction de la première diode 393 à travers la résistance de démarrage 301 de forte valeur.

La polarisation positive de la base 303 du transistor de découpage 320 est retardée à l'aide d'un circuit intégrateur composé de la seconde résistance 381 et d'un second condensateur 382 reliés en série, l'une des bornes de ce condensateur 382 étant reliée au point de référence 300. Ce retard permet d'empêcher l'application d'un potentiel positif à la base 303 du transistor 320 avant l'instant $t_{10}$ quand sa tension collecteur $v_{302}$ (voir figure 2E) passe par une valeur nulle avant de devenir faiblement négative de façon à amorcer la conduction de la diode 321 de l'interrupteur 32. Le circuit intégrateur 381, 382 joue ici le rôle d'un déphaseur en ce qui concerne la demi-sinusoïde négative de la tension $v_{35}$ aux bornes de l'enroulement de réaction 35 dont la partie croissante subit aux bornes du condensateur 382 un déphasage suffisant pour que la diode 321 devienne conductrice avant l'application d'une tension positive à la base du transistor 320.

La sortie de l'intégrateur qui est constituée par la jonction de la résistance 381 avec le condensateur 382, est reliée à l'anode d'une seconde diode 395 dont la cathode est reliée à la base 303 du transistor 320 de manière à isoler, l'un de l'autre, les deux circuits de couplage de la base à l'enroulement de réaction 35.

Il est, par ailleurs, avantageux d'appliquer une polarisation négative à la gâchette du thyristor 52 de façon à augmenter sa sécurité de fonctionnement. Cette polarisation négative est, de préférence, obtenue à l'aide d'un montage redresseur 55 alimenté par l'enroulement de réaction 35 (ou par un autre enroulement bobiné sur le noyau 36 de l'inductance 31). Le montage redresseur 55 comporte une diode 550 dont la cathode est reliée à l'enroulement 35 et dont l'anode est reliée à l'une des bornes d'un condensateur 551 dont l'autre borne est reliée au point 300 du potentiel de référence. La jonction de l'anode de la diode 550 avec le condensateur 551 est reliée à travers une résistance 552 à l'anode d'une diode Zener 553 dont la cathode est également reliée au point 300. L'anode de la diode Zener 553 fournissant une tension continue négative stabilisée est reliée à l'une des bornes d'une autre résistance 56 dont l'autre borne est reliée à la gâchette du thyristor 52 et qui forme avec la résistance de gâchette 53 de celui-ci un diviseur de tension résistif en ce qui concerne la tension de Zener de la diode 553. Si l'on désire limiter la tension de la gâchette par rapport au potentiel de référence à × 0,7 volts, il est possible de connecter la cathode d'une diode 57 à la gâchette du thyristor 52 et son anode au point 300 du potentiel de référence. On peut alors éventuellement omettre la diode Zener 553. Cette diode 57 permet également l'ébasage des impulsions négatives résultant de la différentiation de la forme d'onde rectangulaire fournie par la sortie 47 du comparateur (45, figures 1 et 3) et de caler (dit « clamp » dans la littérature anglo-américaine) leurs bases par rapport au potentiel de référence $V_{300}$.

L'invention n'est pas limitée aux modes de réalisation décrits et représentés, car d'autres modes de réalisation équivalents, notamment en ce qui concerne le générateur de retard variable 40 et son alimentation, sont accessibles à l'homme de l'art. Le dispositif suivant l'invention combine les avantages des dispositifs d'alimentation à découpage des publications US-A-3 999 102 et DE-B-21 60 659 précitées, notamment en ce qui concerne le fonctionnement avec une fréquence de répétition et un rapport cyclique constants et permet une protection accrue du circuit de découpage contre des courants et des tensions excessives même en cas de panne de l'étage de sortie du balayage-ligne ou d'un autre circuit alimenté par un enroulement secondaire (24 à 26, Figure 1) du transformateur-ligne 20. Le transistor de découpage 320 est alors protégé, d'une part, contre des courants collecteur excessifs par la présence de la résistance de mesure et de protection 34 dans son circuit émetteur, qui permet le démarrage et la protection du circuit de découpage en polarisant la gâchette du thyristor 52 et par l'inductance de découpage 31 qui lui assure une séparation de l'étage de sortie 10 (figure 1) du circuit de balayage-ligne et, à travers l'enroulement de réaction 35, l'auto-alimentation de sa base et, d'autre part, contre des tensions crête collecteur-émetteur excessives grâce au fonctionnement à fréquence et rapport cyclique constants, inhérent à la régulation par le déphasage.

## Revendications

1. Dispositif d'alimentation par découpage combiné avec un circuit de balayage-ligne d'un récepteur de télévision, qu'il alimente et dont l'étage de sortie (10) comprend, notamment, un interrupteur bidirectionnel commandé de balayage (11) et, monté en parallèle avec celui-ci, un montage série composé d'un condensateur réservoir (15) et d'un premier enroulement (21) d'un transformateur-ligne (20) et un condensateur de retour (14), le dispositif comprenant un circuit découpage (30) comportant notamment, connectés en série entre les pôles (6, 7) d'une source de tension d'alimentation continue (5), un second enroulement (22) du transformateur-ligne (20), et un interrupteur bidirectionnel commandé de découpage (32), le transfert d'énergie étant effectué par l'intermédiaire des premier et second enroulements (21, 22) et sa régulation étant effectuée par le déphasage variable entre les instants de coupure respectifs des interrupteurs de balayage (11) et de découpage (32), travaillant normalement à rapports cycliques et à fréquence constants, en fonction d'une grandeur électrique dérivée de la tension aux bornes du condensateur réservoir (15) et obtenu au moyen d'un générateur de retard variable (40) alimenté par un troisième enroulement (23) du transformateur-ligne (20), qui fournit des impulsions de retour-ligne, l'interrupteur de découpage (32) comprenant un transistor (320) et une diode (321) montés en parallèle et de façon à conduire en des directions opposées, caractérisé en ce que le circuit de découpage (30) comporte, en outre, une inductance de découpage supplémentaire (31) insérée en série entre le second enroulement (22) et l'interrupteur de découpage (32), un condensateur d'accord (33) étant connecté en parallèle avec ce dernier afin de former avec l'inductance de découpage (31) un circuit résonnant, et en ce qu'il est combiné avec un circuit de commande et de démarrage assurant son démarrage autonome lors de sa mise sous tension, en alimentant alors la base du transistor de découpage (320) et comprenant : un enroulement de réaction (35) bobiné sur le noyau (36) de l'inductance de découpage (31) de manière à former un autre transformateur (37) et ayant une première borne couplée à la jonction (300) de l'émetteur du transistor (320) et de l'anode de la diode (321) et une seconde borne couplée, par des moyens de couplage comprenant notamment une résistance de limitation du courant (38), à la base du transistor (320) afin de la polariser à l'aide d'une tension en opposition de phase avec sa tension collecteur ; un thyristor (52) dont la cathode est reliée au pôle négatif (7) de la source d'alimentation (5) et réunie, par l'intermédiaire d'une résistance de protection (34), à la jonction (300) de l'émetteur du transistor (320) et de l'anode de la diode (321), qui est réunie à son tour à la gâchette du thyristor (52) au moyen d'une résistance de gâchette (53), et dont l'anode est réunie à ladite base, notamment par l'intermédiaire d'une autre source de tension continue (50), destinée à polariser la jonction base-émetteur du transistor (320) à l'envers, lors de l'amorçage du thyristor (52) qui est déclenché au démarrage ou en l'absence d'impulsions de retour-ligne par la chute de tension aux bornes de la résistance de protection (34), provoquée par le courant linéairement croissant dans l'inductance de découpage (31) pendant la conduction du transistor (320) qui est alors polarisé à l'aide d'une résistance de démarrage (301) réunissant sa base au pôle positif (6) de la source d'alimentation (5), et en ce que, en fonctionnement normal, l'amorçage du thyristor (52) est commandé par des impulsions retardées, fournies par la sortie (47) du générateur (40) qui est couplée à la gâchette au moyen d'un condensateur de couplage (54).

2. Dispositif d'alimentation suivant la revendication 1, caractérisé par le fait que le générateur de retard variable (40) est alimenté uniquement par un enroulement auxiliaire (23) du transformateur-ligne (20) lui fournissant des impulsions de retour-ligne servant à son déclenchement, à la régulation par la détection de l'une des amplitudes de celles-ci et à son alimentation par le redressement de ces dernières. (Figures 1 et 3.)

3. Dispositif d'alimentation suivant la revendication 2, caractérisé par le fait que l'une des bornes de l'enroulement auxiliaire (23) est couplée à la jonction de l'émetteur du transistor (320) avec l'anode de la diode (321), qui fournit le potentiel de référence (300) au circuit de découpage (30) et au générateur de retard variable (40).

4. Dispositif d'alimentation suivant l'une quelconque des revendications 1 à 3, caractérisé par le fait que la première borne de l'enroulement de réaction (35) est directement reliée à la jonction de l'émetteur du transistor (320) avec l'anode de la diode (321). (Figure 1.)

5. Dispositif d'alimentation suivant la revendication 3, caractérisé par le fait que la première borne de l'enroulement de réaction (35) est reliée à l'autre borne (230) de l'enroulement auxiliaire (23) du transformateur-ligne (20), afin de compenser, au niveau de l'autre transformateur (37), les signaux induits dans le second enroulement (22) du transformateur-ligne (20) par le courant dans le premier enroulement (21), dû au fonctionnement de l'étage de sortie (10). (Figures 3 et 4.)

6. Dispositif d'alimentation suivant l'une quelconque des revendications 1 à 5, caractérisé par le fait que le circuit de couplage réunissant la sortie (47) du générateur de retard variable (40) à la gâchette du thyristor (52) et comprenant le condensateur de couplage (54) et la résistance de gâchette (53), constitue un circuit différentiateur pour les impulsions retardées.

7. Dispositif d'alimentation suivant l'une quelconque des revendications précédentes, caractérisé par le fait que le générateur de retard variable (40) comporte : un générateur de dents de scie (43) déclenché par les impulsions de retour-ligne et comprenant un condensateur (432) alimenté par un étage de régulation (44) faisant varier la pente de la tension en forme de dents de scie par un courant de charge additionnel de ce condensateur (432), qui est fonction de l'une des amplitudes des impulsions de retour-ligne ; un comparateur de tension (45) comparant le signal fourni par le générateur de dents de scie (43) à une tension de référence fixe ($V_{SC}$) ; et un circuit d'alimentation (46) du générateur de dents de scie (43) et du comparateur (45) comprenant au moins un redresseur d'amplitudes recevant les impulsions de retour-ligne. (Figure 3.)

8. Dispositif d'alimentation suivant l'une quelconque des revendications précédentes, caractérisé par le fait que les moyens de couplage réunissant la seconde borne de l'enroulement de réaction (35) à la base du transistor de commutation (320) comprennent, en série avec la résistance (38), un montage parallèle (39) connu en soi, composé de deux diodes (390, 391) montées tête-bêche et d'un condensateur (392). (Figures 1 et 3.)

9. Dispositif d'alimentation suivant l'une quelconque des revendications 1 à 7, caractérisé par le fait que les moyens de couplage réunissant la seconde borne de l'enroulement de réaction (35) à la base du transistor de commutation (320) comprennent deux circuits de couplage parallèles dont le premier, destiné à alimenter la base en tension négative, comporte un diviseur de tension comprenant deux résistances (380, 383) dont la seconde (383) est reliée à l'émetteur du transistor (320) et dont le point commun est, d'une part, relié à la cathode d'une première diode (393) dont l'anode est reliée à ladite base et, d'autre part, réunie à cette dernière par un condensateur (394) en parallèle avec la première diode (393), le second circuit de couplage comportant un intégrateur ou déphaseur composé d'une résistance (381) et d'un condensateur (382) en série, la jonction du condensateur (382) avec la résistance (381) étant reliée à l'anode d'une seconde diode (395) dont la cathode est reliée à la base du transistor (320), l'autre borne du condensateur (382) étant reliée à l'émetteur de celui-ci. (Figure 4.)

10. Dispositif d'alimentation suivant l'une quelconque des revendications précédentes, caractérisé par le fait que la gâchette du thyristor (52) reçoit, en outre, une tension de polarisation négative qui lui est fournie par un montage redresseur de crêtes négatives (55) comprenant une diode (550) et un condensateur (551) en série, alimenté par l'enroulement de réaction (35) ou par un autre enroulement secondaire bobiné sur le noyau (36) de l'inductance de découpage (31) et dont la sortie est couplée, notamment par une résistance (56), à la jonction de la gâchette et de la résistance de gâchette (53) réunissant celle-ci à l'émetteur du transistor (320). (Figure 4.)

**Claims**

1. A chopping power-supply device combined with a line-scanning circuit in a television receiver, which it supplies, and the output stage (10) of which comprises, more specifically, a controlled bidirectional scanning switch (11) and, mounted in parallel with this switch, a series assembly comprising a storage condenser (15) and a first winding (21) of a line transformer (20) and a return condenser (14), the device comprising a chopping circuit (30) which more specifically comprises, connected in series between the poles (6, 7) of DC supply source (5), a second winding (22) of the line transformer (20), and a controlled bidirectional chopping switch (32), energy transfer being effected by means of the first and second windings (21, 22) and regulation being effected by variable phase displacement between the respective chopping times of the scanning (11) and chopping (32) switches, normally working at constant cyclic ratios and frequency, in relation to an electrical quantity derived from the voltage at the terminals of the storage condenser (15) and obtained by means of a variable delay generator (40) supplied by a third winding (23) of the line transformer (20), which supplies line-return pulses, the chopping switch (32) comprising a transistor (320) and a diode (321), mounted in parallel and in such a way as to conduct in opposite directions, characterized by the fact that the chopping circuit (30) further comprises an additional chopping inductance (31), inserted in series between the second winding (22) and the chopping switch (32), a tuning condenser (33) being connected in parallel with this switch, in order to form a resonance circuit with the chopping inductance (31), and by the fact that it is combined with a control and startup circuit ensuring self-contained startup when switched on, thereupon supplying the base of the chopping transistor (320), and comprising a reaction winding (35) wound on the core (36) of the chopping inductance (31), in such a way as to form another transformer (37) and with one terminal connected to the junction (300) between the transistor emitter (320) and the anode of the diode (321), and a second terminal connected by means comprising in particular a current-limiting resistor (38), to the base of transistor (320), in order to polarize it, by means of a voltage in phase apposition with its collector voltage, a thyristor (52), the cathode of which is connected to the negative pole (7) of the supply source (5), and connected, by means of a protective resistor (34), to the junction (300) of the emitter of transistor (320) and the anode of diode (321), which is connected in turn to the gate of thyristor (52) by means of a gate resistor (53), and the anode of which is connected to the said base, more specifically by means of another DC voltage source (50), designed to polarize the base-emitter junction of transistor (320) in reverse, during activation of thyristor (52), which is tripped at startup or in the absence of line-return pulses by a drop in voltage at the terminals of the protective resistor (34), caused by the lineally increasing current in the chopping inductance (31) during conduction of transistor (320), which is then polarized by means of a startup resistor (301) connecting its base to the positive pole (6) of the power source (5), and by the fact that, in normal operation, starting of the thyristor (52) is controlled by delayed pulses, supplied by the output (47) of the generator (40) connected to the gate by means of a connection condenser (54).

2. A power supply device as defined in claim 1, characterized by the fact that the variable-delay generator (40) is supplied solely by an auxiliary winding (23) of the line transformer (20), supplying it with line-return pulses needed to trip it, for regulation by detection of one of the amplitudes of these pulses, and for its supplying by rectifying these pulses (figures 1 and 3).

3. A power supply device as defined in claim 2, characterized by the fact that one of the terminals of the auxiliary winding (23) is connected to the junction of the emitter of the transistor (320) with the anode of diode (321), which supplies the reference potential (300) to the chopping circuit (30) and variable-delay generator (40).

4. A power supply device as defined in any one or other of claims 1 to 3, characterized by the fact that the first terminal of the reaction winding (35) is directly connected to the junction of the emitter of transistor (320) with the anode of diode (321) (figure 1).

5. A power supply as defined in claim 3, characterized by the fact that the first terminal of the reaction winding (35) is connected to the other terminal (230) of the auxiliary winding (23) of the line transformer (20), in order to compensate, at the level of the other transformer (37), signals induced in the second winding (22) of the line transformer (20) by the current in the first winding (21), caused by functioning of the output stage (10) (figures 3 and 4).

6. A power supply device as defined in any one or other of claims 1 to 5, characterized by the fact that the connecting circuit connecting the output (47) of the variable-delay generator (40) to the gate of thyristor (52), and comprising the connecting condenser (54) and gate resistor (53) forms a differentiator circuit for delayed pulses.

6. A power supply device as defined in any one or other of the preceding claims, characterized by the fact that the variable-delay generator (40) comprises a sweep generator (43) triggered by line-return pulses and comprising a condenser (432) supplied by a regulation stage (44) causing variations in the gradient of the voltage in sawtooth form by an additional load current for this condenser (432), which depends on one of the line-return pulse amplitudes, a voltage comparator (45) comparing the signal supplied by the sweep generator (43) with a fixed reference voltage ($V_{SC}$), and a circuit (46) to supply the sweep generator (43) and comparator, comprising at least one amplitude rectifier receiving line-return pulses (figure 3).

8. A power supply device as defined in any one or other of the preceding claims, characterized by the fact that the connecting device connecting the second terminal of the reaction winding (35) to the base of the switching transistor (320) comprises, in series with the resistor (38), a parallel assembly (39) of a type known in the prior art, comprising two diodes (390, 391) mounted top to bottom, and a condenser (392) (figures 1 and 3).

9. A power supply device as defined in any one or other of claims 1 to 7, characterized by the fact that the connecting device connecting the second terminal of the reaction winding (35) to the base of the switching transistor (320) comprises two parallel connecting circuits, the first of which, intended to supply the base with negative voltage, comprises a voltage divider containing two resistors (380, 383), the second (383) of which is connected to the emitter of transistor (320), and the common point of which is connected, on the one hand, to the cathode of a first diode (393), the anode of which is connected to the transistor base, and on the other hand, to this base by means of a condenser (394) in parallel with the first diode (393), the second connecting circuit comprising an integrator or phase displacer comprising a resistor (381) and a condenser (382) in series, the junction of the condenser (382) with the resistor (381) being connected to the anode of a second diode (395), the cathode of which is connected to the base of transistor (320), the other terminal of the condenser (382) being connected to its transistor emitter (figure 4).

10. A power supply device as defined in any one or other of the preceding claims, characterized by the fact that the trigger of thyristor (52) also receives a negative polarization voltage, supplied to it by a negative peak rectifier assembly (55) comprising a diode (550) and a condenser (551) mounted in series, supplied by the reaction winding (35) or by another second winding wound on the core (36) of the chopping inductance (31) and the output of which is connected, more specifically by a resistor (56) to the junction of the gate and gate resistor (53), connecting this resistor with the emitter of transistor (320) (figure 4).

**Ansprüche**

1. Zerhacker-Speisevorrichtung in Verbindung mit einem Zeilenabtastkreis eines von dieser Vorrichtung gespeisten Fernsehempfängers, deren Ausgangsstufe (10) insbesondere einen gesteuerten bidirektionalen Abtastschalter (11) und eine mit diesem parallel geschaltete Serienschaltung aufweist, welche aus einem Speicherkondensator (15), einer ersten Wicklung (21) eines Zeilentransformators (20) und einem Rücklaufkondensator (14) besteht, wobei die Vorrichtung ferner einen Zerhackerkreis (30) aufweist, welcher insbesondere, in Serienschaltung zwischenden Polen (6, 7) einer Gleichstromquelle (5) angeordnet, eine zweite Wicklung (22) des Zeilentransformators (20) und einen gesteuerten bidirektionalen Zerhackerschalter (32) aufweist, wobei die Energieübertragung über die erste und die zweite Wicklung (21, 22) erfolgt und durch die veränderliche Phasenverschiebung zwischen den jeweiligen Oeffnungszeitpunkten der Abtastschalter (11) und Zerhackerschalter (32) reguliert wird, die normalerweise mit konstanten zyklischen Verhältnissen und konstanter Frequenz in Abhängigkeit von einer von der Klemmenspannung des Speicherkondensators (15) abgeleiteten elektrischen Grösse arbeiten, die von einem durch eine dritte Wicklung (23) des Zeilentransformators (20) gespeisten veränderlichen Rücklauf-Zeilenimpulse erzeugenden Verzögerungserzeuger (40) geliefert wird, und wobei der Zerhackerschalter (32) einen Transistor (320) und eine mit diesem parallel geschaltete Diode (321) besitzt, die derart angeordnet sind, dass sie in entgegengesetzten Richtungen leitfähig sind, dadurch gekennzeichnet, dass der Zerhackerkreis (30) ferner eine zusätzliche Zerhacker-Induktionsdrossel (31) besitzt und ein Abstimmkondensator (33) mit der letzteren parallel geschaltet ist, um mit der Zerhacker-Induktionsdrossel (31) einen Resonanzkreis zu bilden, und dass er mit einem Steuer- und Starterkreis kombiniert ist, der beim Anlegen einer Spannung durch Speisen der Basiselektrode des Zerhackertransistors (320) sein selbsttätiges Starten bewirkt und welcher umfasst : eine auf dem Kern (36) der Zerhacker-Induktionsdrossel (31) angeordnete Rückkopplungswicklung (35), die einen weiteren Transformator (37) bildet und eine erste Klemme besitzt, welche an die Verbindung (300) zwischen der Emitterelektrode des Transistors (320) und der Anode der Diode (321) angeschlossen ist, sowie eine zweite Klemme, die vermittels insbesondere einen Strombegrenzungswiderstand (38) aufweisender Mittel an die Basiselektrode des Transistors (320) angeschlossen ist, um dieselbe durch eine in bezug auf die Spannung der Kollektorelektrode gegenphasige Spannung zu polarisieren ; einen Thyristor (52), dessen Kathode an den negativen Pol (7) der Speisequelle (5), sowie über einen Schutzwiderstand (34) an die Verbindung (300) und der Anode der Diode (321) angeschlossen ist, welch letztere ihrerseits über einen Auslösewiderstand (53) an den Auslöser des Thyristors (52) angeschlossen und ihre Anode an die genannte Basiselektrode angeschlossen ist, insbesondere über eine andere Gleichstromquelle (50), die dazu dient, die Verbindung zwischen Basis- und Emitterelektrode des Transistors (320) umgekehrt zu polarisieren, wenn der Thyristor (52) gezündet wird, welcher beim Starten ausgelöst wird, oder bei Abwesenheit von Zeilenrücklaufimpulsen infolge eines Spannungsabfalls an den Klemmen des Schutzwiderstandes (34), der durch den in der Zerhackerinduktionsdrossel (31) linear während der Leitfähigkeit des Transistors (320) hervorgerufen wird, welch letztere dann vermittels eines seine Basiselektrode mit dem positiven Pol (6) der Speisequelle (5) verbindenden Startwiderstandes (301) polarisiert wird, und dass bei normalem Betrieb die Zündung des Thyristors (52) durch vom Ausgang (47) des Erzeugers (40) gelieferte, verzögerte Impulsionen ausgelöst wird, wobei dieser Erzeugerausgang vermittels eines Koppelkondensators (54) an den Auslöser angeschlossen ist.

2. Speisevorrichtung nach Anspruch 1, dadurch gekennzeichnet, dass der veränderliche Verzögerungserzeuger (50) lediglich durch eine Hilfswicklung (23) des Zeilentransformators (20) gespeist wird, welcher ihm seine Auslösung hervorrufende Zeilenrücklaufimpulse liefert, die ferner dazu dienen, eine der Amplituden der letzteren zu erfassen und den Erzeuger durch Gleichrichtung derselben zu speisen. (Fig. 1 und 3).

3. Speisevorrichtung nach Anspruch 2, dadurch gekennzeichnet, dass eine der Klemmen der Hilfswicklung (23) mit der Verbindung zwischen der Emitterelektrode des Transistors (320) und der Anode des Thyristors (321) verbunden ist, welche das Bezugspotential (300) an den Zerhackerkreis (30) und an den veränderlichen Verzögerungserzeuger (40) abgibt.

4. Speisevorrichtung nach einem der Ansprüche 1 bis 3, dadurch gekennzeichnet, dass die erste Klemme der Rückkopplungswicklung (35) direkt an die Verbindung zwischen der Emitterelektrode des Transistors (320) und der Anode der Diode (321) angeschlossen ist. (Fig. 1).

5. Speisevorrichtung nach Anspruch 3, dadurch gekennzeichnet, dass die erste Klemme der Rückkopplungswicklung (35) mit der anderen Klemme (230) der Hilfswicklung (23) des Zeilentransformators (20) verbunden ist, um beim anderen Transformator (37) die in der zweiten Wicklung (22) des Zeilentransformators (20) die durch den in der ersten Wicklung (21) fliessenden, beim Betrieb der Ausgangsstufe (10) erzeugten Strom induzierten Signale zu kompensieren. (Fig. 3 und 4).

6. Speisevorrichtung nach einem der Ansprüche 1 bis 5, dadurch gekennzeichnet, dass der den Ausgang (47) des veränderlichen Verzögerungserzeugers (40) mit dem Auslöser des Thyristors (52) koppelnde, den Kopplungskondensator (45) und den Auslöserwiderstand (53) umfassende Kopplungskreis einen Differenzierungskreis für die Verzögerungsimpulse bildet.

7. Speisevorrichtung nach einem der vorstehenden Ansprüche, dadurch gekennzeichnet, dass der veränderliche Verzögerungserzeuger (40) umfasst : einen Sägezahn-Spannungserzeuger (43), der durch die Zeilenrücklaufimpulse ausgelöst wird und einen Kondensator (432) aufweist, welcher durch eine Regelstufe (44) gespeist wird, die den Gradienten der sägezahnförmigen Spannung vermittels eines zusätzlichen Ladestroms dieses Kondensators (432) verändert, welcher Ladestrom vom einer der Zeilenrücklaufimpulsions-Amplituden abhängig ist ; einen Spannungsvergleicher (45), der das vom Sägezahn-Spannungserzeuger (43) gelieferte Signal mit einer unveränderlichen Bezugsspannung ($V_{sc}$) vergleicht ; sowie einen dem Sägezahn-Spannungserzeuger (543) und dem Vergleicher (45) zugeordneten Speisekreis (46) mit wenigstens einem Amplitudengleichrichter, der die Zeilenrücklaufimpulse empfängt. (Fig. 3).

8. Speisevorrichtung nach einem der vorstehenden Ansprüche, dadurch gekennzeichnet, dass die die zweite Klemme der Rückkopplungswicklung (35) mit der Basiselektrode des Schalttransistors (320) verbindenden Kopplungsmittel eine in Reihenschaltung mit dem Widerstand (38) liegende, an sich bekannte Parallelschaltung (39) mit zwei gegeneinander umgedreht angeordneten Dioden (390, 391) und einem Kondensator (392) umfassen. (Fig. 1 und 3).

9. Speisevorrichtung nach einem der Ansprüche 1 bis 7, dadurch gekennzeichnet, dass die die zweite Klemme der Rückkopplungswicklung (35) mit der Basiselektrode des Schalttransistors (320) verbindenden Kopplungsmittel zwei parallele Kopplungskreise umfassen, deren erster, zur Speisung der Basiselektrode mit einer negativen Spannung dienender Kreis einen Spannungsteiler besitzt, der zwei Widerstände (380, 383) aufweist, deren zweiter (383) mit der Emitterelektrode des Transistors (320) verbunden ist, und deren gemeinsamer Punkt einerseits mit der Kathode einer ersten Diode (393) verbunden ist, deren Anode an die genannte Basiselektrode angeschlossen ist, während der gemeinsame Punkt ferner anderseits über einen mit der ersten Diode (393) parallelgeschalteten Kondensator (394) an die genannte Basiselektrode angeschlossen ist, wobei der zweite Kopplungskreis einen aus einem Widerstand (381) und einem mit demselben in Reihenschaltung angeordneten Kondensator (382) bestehenden Integrator oder Phasenverschieber aufweist und die Verbindung zwischen dem Kondensator (382) und dem Widerstand (381) an die Anode einer zweiten Diode (395) angeschlossen ist, deren Kathode mit der Basiselektrode des Transistors (320) verbunden ist, und wobei die andere Klemme des Kondensators (382) mit der Emitterelektrode dieses Transistors verbunden ist. (Fig. 4).

10. Speisevorrichtung nach einem der vorstehenden Ansprüche, dadurch gekennzeichnet, dass der Auslöser des Thyristors (52) ferner mit einer negativen Polarisationsspannung gespeist wird, die von einer die negativen Wellenspitzen gleichrichtenden Gleichrichterschaltung (55) geliefert wird, welche eine Diode (550) und einen mit derselben in Reihe liegenden Kondensator (551) aufweist und von der Rückkopplungswicklung (35) oder einer anderen auf dem Kern (36) der Zerhackerinduktionsdrossel (31) angeordneten sekundären Wicklung gespeist wird, und deren Ausgang insbesondere über einen Widerstand (56) an die Verbindung zwischen dem Auslöser und dem Auslöserwiderstand (53) angekoppelt ist, derart, dass der letztere mit der Emitterelektrode des Transistors (320) verbunden ist. (Fig. 4).

0 022 380

FIG_1

0 022 380

FIG.2·a — $V_{23}$

FIG.2·b — $V_{450}$

FIG.2·c — $V_{452}$

FIG.2·d — $V_{GK52}$

FIG.2·e — $V_{302}$

FIG.2·f — $i_{31}$

FIG.2·g — $V_{303}$

2

FIG 3

# FIG_4